# EUROPEAN PATENT SPECIFICATION

(11) **EP 0 988 147 B1**
(45) Date of publication and mention of the grant of the patent: **11.01.2006**
(21) Application number: 98926203.5
(22) Date of filing: 08.06.1998
(51) Int. Cl.: B32B 27/32, C09J 7/02

(54) **CO-EXTRUDED FILMS, AND TAPE PRODUCTS AND ARTICLES OF MANUFACTURE CONTAINING THEM**
COEXTRUDIERTE FILME UND DIESE ENTHALTENDE BANDROLLEN UND HERGESTELLTE GEGENSTÄNDE
FILMS COEXTRUDES ET PRODUITS EN RUBAN ET ARTICLES MANUFACTURES LES COMPRENANTS

(30) Priority: 09.06.1997 US 49241 P
(43) Date of publication of application: 29.03.2000
(73) Proprietor: Tesa Tape Inc., Charlotte, NC 28209 (US)
(72) Inventor: SUBRAMANIAN, Pazam, Concord, OH 44077 (US); TRAMPER, Richard, Alan, Jr., Kent City, MI 49330 (US)
(74) Representative: Stubbe, Andreas
(86) International application number: PCT/US1998/011332
(87) International publication number: WO 1998/056581

(56) References cited:
- US-A- 4 410 582
- US-A- 4 584 220
- US-A- 4 699 816
- US-A- 4 828 928
- US-A- 5 093 187

## Description

### 1. Field of the Invention

The present invention relates to a process for producing a co-extruded film, to the film produced thereby, to tape products comprising the film and to uses of the tape products.

### 2. Description of Related Art

Monoaxially oriented polypropylene ("MOPP") films are well known. These films are typically made by processing polypropylene granules through a film die to yield a bulky precursor film, then the precursor film is stretched in one direction, for example, on a roll-type drawing frame, to yield the final MOPP films.

The act of stretching "orients" the MOPP films with the result that they typically are characterized by great tensile strength in the direction of the stretching. At the same time, these MOPP films are characterized by unacceptable weakness in the cross direction perpendicular to the direction of the stretching.

When the films are cut into tapes and other products, "micronicks" may appear along either long edge. Because the film is weak in the cross direction, these micronicks have a tendency to enlarge in the cross direction ultimately leading to failure.

Engelmann et al, U.S. Patent No. 5,093,187, the entire disclosure of which is hereby incorporated by reference, solves this problem by co-extruding the polypropylene film with a layer of, for example, polyethylene film. This second layer is "tougher" than the polypropylene film in that the second layer is resistant to the formation of micronicks. Because the second layer is adhered to the polypropylene layer either micronicks do not form in the polypropylene layer or any micronicks that do form do not progress in the cross direction with the result that in either case such co-extruded tapes are less likely to fail.

Engelmann et al teach that the most preferred arrangement is to have the polypropylene base layer or layers account for 65-75% of the thickness of the co-extruded film, which means that the second layer, for example, the co-extruded polyethylene layer, should account for the remaining 25-35%. See column 5, lines 16-21. Thus, for example, the most preferred films, which are those in the examples, are characterized by a total thickness of 83-87 µm, of which 60-63 µm of thickness is the polypropylene base layer, which means that the remaining 20-27 µm of thickness is the second layer. See, especially, column 6, lines 29-33.

Applicants have discovered that films prepared in these proportions are characterized by an unacceptably high longitudinal elongation at break, which makes them unsuitable for some purposes. For example, these tapes are used to tear open closed structures such as envelopes and boxes. The tapes are applied to the closed structures on a manufacturing line. At high line speeds, which are desirable, these films are pulled along the length and stretched over a portion of the closed structure and then adhered thereto and cut. Because of the unacceptably high longitudinal elongation at break, these tapes exhibit a rubber band-like quality and recoil when cut leading to inadequate coverage across the closed structure.

As a practical matter, the longitudinal elongation at break should be no more than 35%, which is, by the way, what Engelmann et al show is exhibited by non-co-extruded comparison tapes A, B, and C. See Table 1 at column 8, lines 41 ff. By way of contrast, the tapes of Engelmann et al are reportedly characterized by a longitudinal elongation at break of at least 40%, although Applicants have discovered that the commercial embodiment falling under this patent is characterized by a longitudinal elongation at break of at least 55%.

Another problem associated with MOPP films, particularly adhesive tapes made therefrom, is that such tapes, when unwound from rolls are characterized by "shredding" or "fibrillation." When wound into a roll, the adhesive layer becomes adhered to the polypropylene layer so that, when the tape is unwound from the roll, the adhesive pulls off filaments of the polypropylene layer resulting in a shredded appearance of the tape. Not only is the aesthetic appearance of the tape greatly diminished, but the presence of these shreds adhered to the adhesive results in greatly diminished tack where there are numerous such shreds.

Engelmann et al solve this problem by coating with an adhesive-repellant release layer on the side of the film that is not coated with the adhesive. See column 5, lines 66-68. However, the examples make use of a commercially available silicone release lacquer. See column 6, lines 39-42. The use of silicone release lacquers increases production costs and drying times and decreases manufacturing speeds.

### SUMMARY OF THE INVENTION

Accordingly, it was one object of the present invention to provide a co-extruded film having longitudinal elongation at break properties similar to those exhibited by the prior non-co-extruded films of the marketplace, namely a longitudinal elongation at break of no more than about 35%.

It was another object of the present invention to provide a co-extruded adhesive tape that either dispensed with the need for an adhesive-repellant release layer altogether or else incorporated adhesive-repellant release coatings that were cheaper and more efficient to apply.

These and other objects were met by the present invention, which relates in a first embodiment to a film comprising:
(A) a base layer; and
(B) a reinforcing layer adhered to (A);

wherein (B) is made of a material that is tougher than (A), (B) forms a continuous layer over a surface of (A) and the thickness of (B) is less than 25% of the total thickness of (A) + (B)
and wherein the thickness of said base layer (A) ranges from 60 µm to 125 µm and the thickness of said reinforcing layer (B) ranges from 2 µm to 10 µm.

When it is stated herein that reinforcing layer (B) is made of a material that is "tougher" than base layer (A), it is meant that reinforcing layer (B), when subjected to an impact load from which base layer (A) already suffers a brittte fracture, is deformed without fracture. Thus, reinforcing layer (B) preferably has higher impact strength, elongation and energy absorption.

As compared to the films described by Engelmann et al, the inventive films are characterized by outstanding film properties. While, as noted above, the films described by Engelmann et al are reportedly characterized by a longitudinal elongation at break of at least 40%, and the commercial embodiment falling under this patent is characterized by a longitudinal elongation at break of at least 55%, the inventive films are characterized by a longitudinal elongation at break of no more than about 35%.

Surprisingly, the improved properties of the inventive films are achieved without a loss of tensile strength. Thus, for example, 63 µm thick films prepared according to the present invention exhibited an ultimate tensile stress, measured longitudinally, of 70-80 N/4 mm. By comparison, the exemplified films of Engelmann et al, which varied in thickness from 83-85 µm, exhibited an ultimate tensile stress of 65-73 N/4 mm. The higher tensile stress of the inventive films is surprising because tensile strength increases nearly linearly with increasing thickness. Therefore, the inventive film, being thinner, would have been expected to exhibit a lower tensile strength, but this was not observed.

### BRIEF DESCRIPTION OF THE DRAWINGS

The invention will now be described in greater detail with reference to the drawings, wherein:
Figure 1 is a schematic of a two-layered film according to the present invention;
Figure 2 is a schematic of a five-layered tape product according to the present invention;
Figure 3 is a schematic of a series of three packaging bags joined together by two strips of the tape product according to the present invention;
Figure 4 is a schematic of an envelope adapted to be sealed and then opened by pulling on a tape reinforced with a tape product according to the present invention; and
Figure 5 is a schematic of a shopping bag reinforced around the handle opening with strips of the tape product according to the present invention.

### DETAILED DESCRIPTION OF THE INVENTION

In general, the selection of materials for the base and reinforcing layers is as set forth in Engelmann et al. The main differences between the inventive films and those of Engelmann lie in the thickness of the reinforcing layer and the properties that result therefrom. The inventive films may comprise multiple base and reinforcing layers, but, in this event, the total thicknesses of all base and reinforcing layers should not exceed the parameters set forth herein.

Thus, the base layer comprises a polypropylene-olefin copolymer and/or a polypropylene toughening additive mixture. In a preferred embodiment, the base layer contains predominately, preferably at least 70%, of a high impact modified polypropylene. For this purpose, random or block copolymers of propylene and olefins are preferably used.

The base layer may contain up to 100% propylene-olefin copolymers or, admixed to these copolymers, may contain up to 25% of a toughening additive. This is suitable for improving the tensile impact strength of the polypropylene in the cross direction. Preferred toughening additives are linear low density polyethylene (LLDPE), thermoplastic rubbers such as butadiene-styrene copolymers (SBS) or isoprene-styrene copolymers (SIS), particularly their block copolymers in each case, or ethylene-vinyl acetate (EVA).

The base layer may also contain polypropylene homopolymer, but then also contains a toughening additive, preferably at least 10%, but not greater than 30%.

Mixtures of propylene-olefin copolymers and propylene homopolymer may also be used. In this embodiment, the proportion of the toughening additives may be reduced in accordance with the increasing copolymer proportion.

The toughening agents are preferably added individually. However, mixtures of toughening agents can also be used.

The base layer preferably contains 75 to 100% of copolymer and 25 to 0% of LLDPE, or 80 to 100% copolymer and 20 to 0% thermoplastic rubber, in particular SBS or SIS, or 75 to 100% copolymer and 25 to 0% EVA. Especially preferred is a blend of 80 to 95% copolymer and 5 to 20% LLDPE, or 85 to 95% copolymer and 5 to 15% thermoplastic rubber, in particular SBS or SIS, or 85 to 95% copolymer and 5 to 15% EVA.

In an especially preferred embodiment, the base layer contains propylene-ethylene copolymer and this is blended with, as the toughening agent, linear low density polyethylene, wherein the ratio of copolymer to blended polyethylene ranges from 75:25 to 95:5, and preferably from 90:10 to 95:5.

For the reinforcing layer arranged on the base layer, mixtures of materials are used which preferably contain clearly higher proportions of a toughening additive and/or are distinguished by a higher tensile impact strength than the base layer. A reinforcing layer preferably contains polypropylene, in particular up to 65% propylene-olefin copolymer or 55% propylene-homopolymer, as specified for the base layer, preferably at least 20% in each case, to which preferably 35 or 45 to 80% of a toughening additive, in particular LLDPE, thermoplastic rubbers or EVA, are added. The toughening additives are preferably added individually. However, again, mixtures of toughening additives may also be used. Here too, mixtures of the polypropylene-olefin copolymers and the propylene homopolymer may also be used. As in the base layers, the toughening additive effects an improvement in the tensile impact strength, in particular in the cross-direction.

The reinforcing layer preferably contains 20 to 50% copolymer and 80 to 50% LLDPE, or 50 to 70% copolymer and 50 to 30% thermoplastic rubber, in particular SBS or SIS, or 20 to 40% copolymer and 80 to 60% EVA, but, it is particularly preferred that the reinforcing layers contain 30 to 40% copolymer and 60 to 70% LLDPE, or 55 to 65% copolymer and 35 to 45% thermoplastic rubber, in particular SBS or SIS, or 25 to 35% copolymer and 65 to 75% EVA.

In an especially preferred embodiment, the reinforcing layer contains propylene-ethylene copolymer and this is blended with linear low density polyethylene, wherein the ratio of copolymer to blended polyethylene ranges from 50:50 to 25:75, and preferably from 40:60 to 30:70.

For good compatibility between the layers, it is preferred that the same toughening agent be used in the base layer and the reinforcing layer. However, the use of different individual toughening agents or different mixtures of toughening agents is also possible.

The LLDPE, which is especially contemplated, is a special ethylene copolymer having a density of about 0.910 to 0.935 g/cm³, copolymerized with the use of an olefin containing at least three, preferably 3 to 10 carbon atoms. See L. Schwiegk: "LLDPE-ein neues Polyäthylen" (LLDPE-A new polyethylene), Plastverarbeiter (Fabricator in plastics), 33rd year, 1982, No. 9, pages 1035-1037.

For the preferred base films according to the invention, an LLDPE having 1-octene as comonomer, which has a density of approximately 0.920 g/cm³, is used.

A block copolymer having a styrene content of approximately 50% is preferably used as butadiene-styrene toughening agent. The use of similarly acting styrene-isoprene copolymers is likewise possible.

A polymer having a vinyl content of about 45% is preferably used as EVA copolymer.

Base layers and/or reinforcing layers may additionally contain smaller proportions, preferably up to 10%, in particular up to 5%, of further suitable polymers and/or conventional additives.

The inventive films are preferably obtained by co-extrusion of the materials comprising the individual layers into a co-extruded primary film and subsequent stretching of the primary film in at least one direction using conventional techniques. It is also possible to extrude and stretch the individual layers, then laminate the individual layers together. Stretching is preferably carried out in the longitudinal direction.

The stretching ratio, as defined by Engelmann at column 5, lines 3-13, in the longitudinal direction is preferably 1:5 to 1:9, particularly 1:6.5 to 1:7.5.

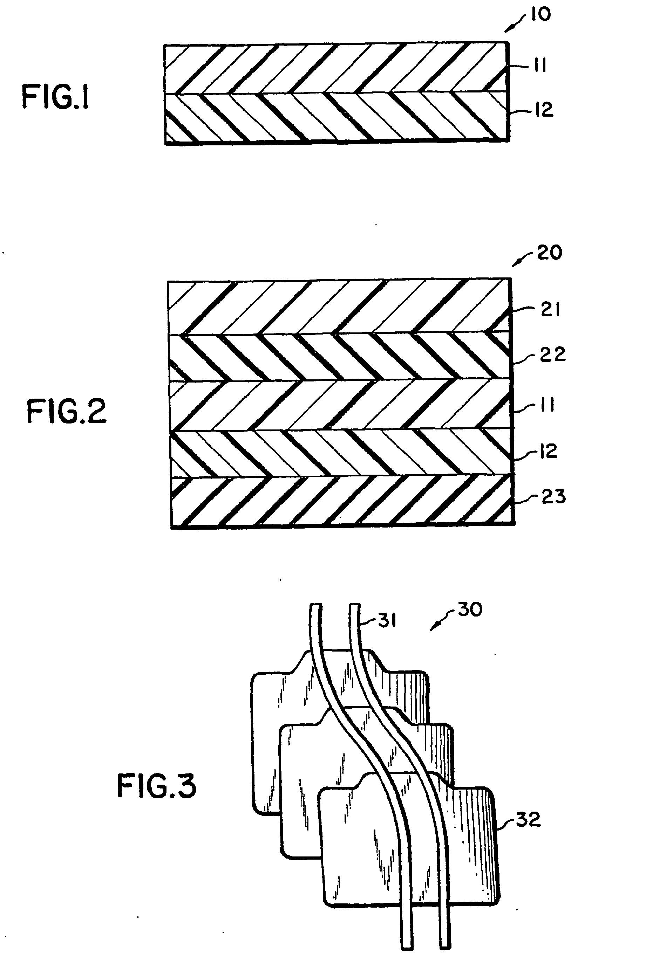

The thickness of the ultimate film is such that the combined thickness of all reinforcing layers is less than 25%, preferably less than 15%, and particularly preferably less than 10% of the thickness of the entire film. Refening now to Figure 1, there is shown a cross-section of a film 10 according to the present invention, which comprises base layer 11 and reinforcing layer 12. The thickness of base layer 11 ranges from 60 µm to 125 µm and the thickness of reinforcing layer 12 ranges from 2 µm to 10 µm. In the case where there are multiple base layers and/or multiple reinforcing layers, then the combined thicknesses of the base layers ranges from 60 µm to 125 µm and the combined thicknesses of the reinforcing layers ranges from 2 µm to 10 µm. In an especially preferred embodiment, there is a single base layer ranging in thickness from 60 µm to 125 µm and a single reinforcing layer ranging in thickness from 3 µm to 5 µm.

Referring now to Figure 2, the inventive films may be incorporated into a tape product 20, which exhibits the advantageous properties mentioned above. The tape product depicted in the figure consists of base layer 11, reinforcing layer 12, adhesive layer 21, primer layer 22, and optional adhesive-repellant release coating layer 23. For the adhesive, primer and optional release coating layers, any conventional materials may be used. The adhesive is preferably selected from the group consisting of a natural rubber-based adhesive, a synthetic rubber-based adhesive, and an acrylic-based adhesive, and is a hot melt-based adhesive, a solvent-based adhesive, or a water-based adhesive. In one preferred embodiment, the release coating layer is present and constitutes a carbamate release coating, for example, a polyvinyl octadecyl release coating such as ESCOAT P-20™ from Anderson Development and RA95-H™ from Mazo Corporation. In another preferred embodiment, the tape product lacks the release coating.

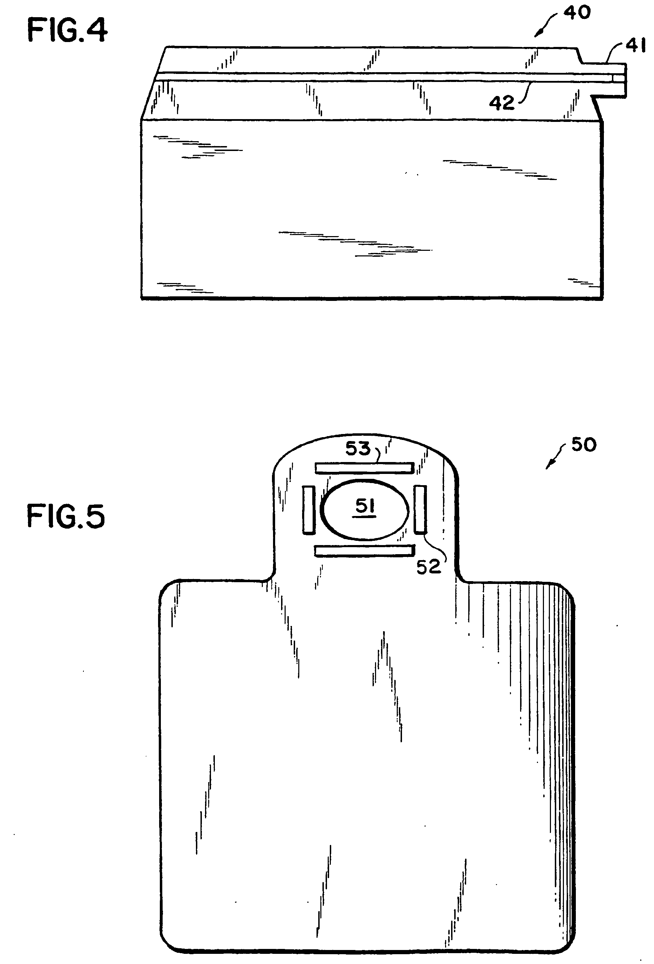

The inventive tapes are applied to articles of manufacture for various well-known purposes, for example, for tearing or reinforcing. In a preferred embodiment, which is depicted in Figure 3, the article of manufacture is a series of packing bags 30, wherein the individual bags 32 are joined together by strips 31 of the inventive tape product. In another preferred embodiment, which is depicted in Figure 4, the article of manufacture is an envelope 40 comprising a tear tab 41, for opening the envelope after it is sealed, wherein the tear tab 41 is reinforced by the tape product 42 according to the present invention. Tear tapes like these are well known and used to open many types of packages, for example, not only envelopes, but also detergent boxes, cigarette packages, etc. In another preferred embodiment, which is depicted in Figure 5, the article of manufacture is a shopping bag 50, which comprises an opening 51 in the handle region, wherein the opening is reinforced on all sides by vertical tape product strips 52 and horizontal tape product strips 53. This type of reinforcement is useful on all types of articles, for example, not only shopping bags, but also edges of photo albums, holes in notebook paper, etc.

When the co-extruded film is cut into tapes, preferably a regular blade is used so that the production of micronicks is avoided. A regular blade produces a normal edge, which is substantially without micronicks. In spite of the foregoing, where it is desirable to produce micronicks to make the tapes intentionally easily tearable in the cross-wise direction, then the film can be cut into tapes using, for example, a serrated blade.

The invention will now be described in further detail by reference to the following non-limiting example:

### Example

From a main extruder, there was extruded a 1530 mm wide base layer from a blend of an impact modified polypropylene (7C06™ resin from Shell), a linear low density polyethylene (2032™ resin from Dow), and a colorant (1051672 Red™ from Spectrum). The ratio of the impact modified polypropylene to the linear low density polyethylene was 93 to 7% by weight. The main extruder consisted of five zones, which operated at temperatures between 215 and 250°C.

Onto this base layer, from a co-extruder, there was co-extruded a 1530 mm wide reinforcing layer from a blend of 7C06™ resin, 2032™ resin, and a defibrillating agent (HY6100™ resin, also from Shell). The ratio of 7C06™:2032™:HY6100™ was 39.6:60.3:0.1 percent by weight. The co-extruder consisted of three zones, which also operated at temperatures between 215 and 250°C.

After extrusion, the film was first cooled to 35 to 40°C, then passed through two cooling and one glazing rolls, which were operated at 80 to 85°C. Thereafter, the film was passed through a preheating roll, which was operated at approximately 108°C, then subjected to an orientation at 120°C. Subsequent to this, the film was annealed by passing the film over an annealing roll, which was operated at 130°C, then over a series of progressively cooler cooling rolls.

The amount of extruded material was varied to yield three inventive tapes having thicknesses of, respectively, 63, 72 and 120 µm. For comparison, a 63 µm and a 120 µm film, each lacking a reinforcing layer ("No PE"), were also extruded. The 63 µm, no PE, film was comprised of 80% by weight HY6100™ and 20% by weight 2032™. The 120 µm, no PE film was comprised of 7C06™ and a small amount of a colorant. The resulting films exhibited the properties shown in Table 1.

**Table 1**

| Thickness (µm) | Tensile Strength (N/4 mm) | Impact Tensile Strength (kJ/m²) | Load At 10% Elongation (N/4 mm) | Elongation To Break (%) |
|---|---|---|---|---|
| 63 ± 3 µm (PE¹ = 2-8 µm) | 72.8 | 2222 | 38.4 | 35 |
| 72 ± 3 µm (PE = 2-8 µm) | 79.2 | 2130 | 42.4 | 32 |
| 120 ± 6 µm (PE = 2-10 µm) | 120 | 2400 | 64 | 23 |
| 63 ± 3 µm (No PE) | 68.8 | 1800 | 36 | 40 |
| 120 ± 6 µm (No PE) | 152 | 2800 | 80 | 35 |

| | | | | |
|---|---|---|---|---|
| ¹PE indicates the presence of a polyethylene layer of the indicated thickness | | | | |

## Claims

1. A film comprising:
(A) a base layer; and
(B) a reinforcing layer adhered to (A);
wherein (B) is made of a material that is tougher than (A), (B) forms a continuous layer over a surface of (A) and the thickness of (B) is less than 25% of the total thickness of (A) + (B)
and wherein the thickness of said base layer (A) ranges from 60 µm to 125 µm and the thickness of said reinforcing layer (B) ranges from 2 µm to 10 µm.

2. The film according to claim 1, wherein base layer (A) comprises polypropylene-olefin copolymer.

3. The film according to claim 2, wherein base layer (A) further comprises blended polyethylene.

4. The film according to claim 3, wherein the ratio of blended polyethylene to polypropylene-olefin copolymer in base layer (A) ranges from 25:75 to 5:95.

5. The film according to claim 1, wherein reinforcing layer (B) comprises polyethylene.

6. The film according to claim 5, wherein reinforcing layer (B) further comprises blended polypropylene-olefin copolymer.

7. The film according to claim 6, wherein the ratio of blended polypropylene-olefin copolymer to polyethylene in reinforcing layer (B) ranges from 50:50 to 25:75.

8. The film according to claim 7, wherein the thickness of said reinforcing layer (B) ranges from 3 µm to 5 µm.

9. The film according to claim 7, which is prepared by co-extruding said base layer (A) with said reinforcing layer (B).

10. A tape product comprising:
(A) the film according to any one of claims 1-9; and
(B) an adhesive coated on film (A).

11. The tape product according to claim 10, wherein the adhesive is selected from the group consisting of a natural rubber-based adhesive, a synthetic rubber-based adhesive, and an acrylic-based adhesive.

12. The tape product according to claim 11, wherein the adhesive is a hot melt-based adhesive, a solvent-based adhesive, or a water-based adhesive.

13. The tape product according to claim 10 further comprising an adhesive-repellant release material coated on film (A) on a side opposite that on which adhesive (B) is coated.

14. The tape product according to claim 13, wherein the adhesive repellant release material is a carbamate release coating.

15. The tape product according to claim 14, wherein the adhesive is selected from the group consisting of a natural rubber-based adhesive, a synthetic rubber-based adhesive, and an acrylic-based adhesive.

16. The tape product according to claim 15, wherein the adhesive is a hot melt-based adhesive, a solvent-based adhesive, or a water-based adhesive.

17. An article of manufacture comprising the tape product according to any one of claims 10-16.

18. The article of manufacture according to claim 17, which comprises a series of packing bags adhered in series by said tape product.

19. The article of manufacture according to claim 17, which comprises a sealed package comprising said tape product and adapted to be opened by pulling on one end of said tape product.

20. The article of manufacture according to claim 17, which comprises a container reinforced with said tape product.

## Patentansprüche

1. Folie, enthaltend:
(A) eine Basisschicht und
(B) eine auf (A) haftende Verstärkungsschicht;
bei der (B) aus einem zäheren Material besteht als (A), (B) eine kontinuierliche Schicht auf der Oberfläche von (A) bildet und die Dicke von (B) weniger als 25% der Gesamtdicke von (A)+(B) beträgt
und die Dicke der Basisschicht (A) im Bereich von 60 µm bis 125 µm und die Dicke der Verstärkungsschicht (B) im Bereich von 2 µm bis 10 µm liegt.

2. Folie nach Anspruch 1, bei der die Basisschicht (A) Polypropylen-Olefin-Copolymer enthält.

3. Folie nach Anspruch 2, bei der die Basisschicht (A) ferner beigemischtes Polyethylen enthält.

4. Folie nach Anspruch 3, bei der das Verhältnis von beigemischtem Polyethylen zu Polypropylen-Olefin-Copolymer in der Basisschicht (A) im Bereich von 25:75 bis 5:95 liegt.

5. Folie nach Anspruch 1, bei der die Verstärkungsschicht (B) Polyethylen enthält.

6. Folie nach Anspruch 5, bei der die Verstärkungsschicht (B) ferner beigemischtes Polypropylen-Olefin-Copolymer enthält.

7. Folie nach Anspruch 6, bei der das Verhältnis von beigemischtem Polypropylen-Olefin-Copolymer zu Polyethylen in der Verstärkungsschicht (B) im Bereich von 50:50 bis 25:75 liegt.

8. Folie nach Anspruch 7, bei der die Dicke der Verstärkungsschicht (B) im Bereich von 3 µm bis 5 µm liegt.

9. Folie nach Anspruch 7, die durch Coextrudieren der Basisschicht (A) mit der Verstärkungsschicht (B) hergestellt wird.

10. Bandprodukt, enthaltend:
(A) die Folie nach einem der Ansprüche 1-9 und
(B) einen auf die Folie (A) aufgetragenen Klebstoff.

11. Bandprodukt nach Anspruch 10, bei dem der Klebstoff aus der Gruppe bestehend aus einem Klebstoff auf Naturkautschukbasis, einem Klebstoff auf Synthesekautschukbasis und einem Klebstoff auf Acrylatbasis stammt.

12. Bandprodukt nach Anspruch 11, bei dem es sich bei dem Klebstoff um einen Klebstoff auf Hotmelt-Basis, einen Klebstoff auf Lösungsmittelbasis oder einen Klebstoff auf Wasserbasis handelt.

13. Bandprodukt nach Anspruch 10, ferner enthaltend ein auf die Folie (A) auf einer der mit dem Klebstoff (B) beschichteten Seite gegenüberliegenden Seite aufgetragenes klebstoffabweisendes Trennmaterial.

14. Bandprodukt nach Anspruch 13, bei dem es sich bei dem klebstoffabweisenden Trennmaterial um einen Carbamat-Trennlack handelt.

15. Bandprodukt nach Anspruch 14, bei dem der Klebstoff aus der Gruppe bestehend aus einem Klebstoff auf Naturkautschukbasis, einem Klebstoff auf Synthesekautschukbasis und einem Klebstoff auf Acrylatbasis stammt.

16. Bandprodukt nach Anspruch 15, bei dem es sich bei dem Klebstoff um einen Klebstoff auf Hotmelt-Basis, einen Klebstoff auf Lösungsmittelbasis oder einen Klebstoff auf Wasserbasis handelt.

17. Erzeugnis, umfassend das Bandprodukt nach einem der Ansprüche 10-16.

18. Erzeugnis nach Anspruch 17, das eine Reihe von Verpackungsbeuteln, die durch das Bandprodukt hintereinander geklebt sind, umfaßt.

19. Erzeugnis nach Anspruch 18, das eine versiegelte Packung umfaßt, die das Bandprodukt enthält und durch Ziehen an einem Ende des Bandprodukts geöffnet werden kann.

20. Erzeugnis nach Anspruch 17, das einen mit dem Bandprodukt verstärkten Behälter umfaßt.

## Revendications

1. Film comprenant :
(A) une couche de base, et
(B) une couche de renforcement adhérant à (A),
où (B) est constitué d'un matériau plus tenace que (A), (B) forme une couche continue sur la surface de (A) et l'épaisseur de (B) est de moins de 25% de l'épaisseur totale de (A) + (B), et où l'épaisseur de ladite couche de base (A) est de 60 µm à 125 µm et l'épaisseur de ladite couche de renforcement (B) est de 2 µm à 10 µm.

2. Film selon la revendication 1, dans lequel la couche de base (A) comprend un copolymère de polypropylène - oléfine.

3. Film selon la revendication 2, dans lequel la couche de base (A) comprend en outre du polyéthylène mélangé.

4. Film selon la revendication 3, dans lequel la proportion du polyéthylène mélangé au copolymère de polypropylène - oléfine dans la couche de base (A) est de 25:75 à 5:95.

5. Film selon la revendication 1, dans lequel la couche de renforcement (B) comprend du polyéthylène.

6. Film selon la revendication 5, dans lequel la couche de renforcement (B) comprend en outre un copolymère de polypropylène - oléfine mélangé.

7. Film selon la revendication 6, dans lequel la proportion du copolymère de polypropylène - oléfine mélangé au polyéthylène dans la couche de renforcement (B) est de 50:50 à 25:75.

8. Film selon la revendication 7, dans lequel l'épaisseur de ladite couche de renforcement (B) est de 3 µm à 5 µm.

9. Film selon la revendication 7, préparé par coextrusion de ladite couche de base (A) avec ladite couche de renforcement (B).

10. Produit en ruban comprenant :
(A) le film selon l'une quelconque des revendications 1 à 9, et
(B) un adhésif appliqué sur le film (A).

11. Produit en ruban selon la revendication 10, dans lequel l'adhésif est choisi dans le groupe formé par un adhésif à base de caoutchouc naturel, un adhésif à base de caoutchouc synthétique et un adhésif à base acrylique.

12. Produit en ruban selon la revendication 11, dans lequel l'adhésif est un adhésif à base thermofusible, un adhésif à base de solvant ou un adhésif à base aqueuse.

13. Produit en ruban selon la revendication 10, comprenant en outre un matériau antiadhésif repoussant l'adhésif appliqué sur le film (A) sur une face opposée à celle sur laquelle est appliqué l'adhésif (B).

14. Produit en ruban selon la revendication 13, dans lequel le matériau antiadhésif repoussant l'adhésif est une couche antiadhésive à base de carbamate.

15. Produit en ruban selon la revendication 14, dans lequel l'adhésif est choisi dans le groupe formé par un adhésif à base de caoutchouc naturel, un adhésif à base de caoutchouc synthétique et un adhésif à base acrylique.

16. Produit en ruban selon la revendication 15, dans lequel l'adhésif est un adhésif à base thermofusible, un adhésif à base de solvant ou un adhésif à base aqueuse.

17. Article manufacturé comprenant le produit en ruban selon l'une quelconque des revendications 10 à 16.

18. Article manufacturé selon la revendication 17, comprenant une série de sacs d'emballage solidarisés en séries par ledit produit en ruban.

19. Article manufacturé selon la revendication 17, comprenant un emballage fermé comprenant ledit produit en ruban et adapté de manière à être ouvert par traction sur une extrémité dudit produit en ruban.

20. Article manufacturé selon la revendication 17, comprenant un conteneur renforcé par ledit produit en ruban.
